Europäisches Patentamt

European Patent Office

Office européen des brevets

(19)

(11) Veröffentlichungsnummer: **0 076 838**
**B1**

(12) # EUROPÄISCHE PATENTSCHRIFT

(45) Veröffentlichungstag der Patentschrift:
12.09.84

(21) Anmeldenummer: 82901414.1

(22) Anmeldetag: 20.04.82

(86) Internationale Anmeldenummer:
PCT/EP 82/00084

(87) Internationale Veröffentlichungsnummer:
WO 82/03622 (28.10.82 Gazette 82/26)

(51) Int. Cl.³: **C 04 B 21/10, C 04 B 41/30,
B 28 B 7/00**

(54) **VERFAHREN ZUM HERSTELLEN VON SCHAUMBETONROHLINGEN.**

(30) Priorität: 21.04.81 DE 3115888

(43) Veröffentlichungstag der Anmeldung:
20.04.83 Patentblatt 83/16

(45) Bekanntmachung des Hinweises auf die Patenterteilung:
12.09.84 Patentblatt 84/37

(84) Benannte Vertragsstaaten:
AT BE CH DE FR GB LI LU NL SE

(56) Entgegenhaltungen:
DE - B - 1 207 255
US - A - 2 485 742
US - A - 3 192 291
US - A - 4 036 301

Chemical Abstracts, volume 84, 1976, (Columbus, Ohio, US) see page 307 abstract 94621n, JP, A, 75132037, 18 October 1975, Kubota, Ltd.

(73) Patentinhaber: SICOWA Verfahrenstechnik für Baustoffe GmbH & Co. KG, Handerweg 17, D-5100 Aachen (DE)

(72) Erfinder: SCHULZ, Eckhard, Lillenstrasse 10, D-4512 Wallenhorst (DE)
Erfinder: GLITZA, Horst, Am Hülsberg 8, D-4370 Marl (DE)
Erfinder: ENGERT, Hanns-Jörg, Handerweg 17, D-5100 Aachen (DE)

(74) Vertreter: Dipl.-Ing. H. Marsch Dipl.-Ing. K. Sparing Dipl.-Phys.Dr. W.H. Röhl Patentanwälte, Rethelstrasse 123, D-4000 Düsseldorf (DE)

## Beschreibung

Die Erfindung betrifft ein Verfahren zum Herstellen von Schaumbetonrohlingen und insbesondere von Mauersteinrohlingen.

Bei der Herstellung von Bauelementen aus Schaumbeton wird eine mit Schaum porosierte Rohmischung hergestellt, die in eine in der Regel oben offene Form gefüllt wird, in der der gebildete Formkörper nach Erreichen einer genügenden Festigkeit zum Erlangen seiner Endfestigkeit in gespanntem Dampf autoklaviert oder einem Warmbehandlungsverfahren unterzogen oder an der Luft gelagert wird. Dieses Verfahren erfordert je nach Behandlungsmethode zum Erlangen der Endfestigkeit eine Formstandzeit von mehreren Stunden bis mehreren Tagen.

So wird in dem Buch von S. Reinsdorf, Leichtbeton Band II: Porenbetone, VEB Verlag für Bauwesen, Berlin 1963, Seite 249 und 250 die Herstellungstechnologie für dampfdruckgehärtete Schaumbetone beschrieben. Hier wird ausgeführt, dass die Lagerungszeit der Schaumbetonelemente zwischen dem Giessen und dem Beginn des Autoklavierens ca. 8-16 h in Abhängigkeit von der Dicke der Elemente betragen soll. Daran schliesst sich die Dampfdruckhärtung mit ca. 14 bis 19 h Gesamtdauer an. Erst nach Abschluss der Dampfdruckhärtung ist ein Entschalen der Elemente aus der Form möglich. In dem Buch von W. Altner und W. Reichel, Betonschnellerhärtung, Betonverlag GmbH 1981, Seite 38 bis 101 wird auf Besonderheiten bei der Warmbehandlung von Leichtbetonen eingegangen. Der den Schaumbeton umfassende Leichtbeton ist in dieser Literaturstelle der Leichtbeton der Gruppe b). Auch hier wird eine Lagerungszeit zwischen dem Giessen und dem Beginn der Warmbehandlung – je nach Methode – zwischen 1,5 bis 4 h vorgeschrieben. Die Aufwärmegeschwindigkeit soll wegen des hohen Luftporengehaltes – z.B. bei Dampfbehandlung – 15 bis 20° K/h nicht überschreiten, was eine Aufwärmezeit von mehreren Stunden erforderlich macht. Im gleichen Buch wird auf Seite 206 für Schaumbeton eine Warmbehandlungsdauer von 22 bis 24 h bei einer Vorlagerungszeit von 3 bis 5 h angegeben.

Die Vorlagerungszeit bei nachfolgender Dampfdruckerhärtung wie Warmbehandlung mit den vorgenannten Zeitintervallen ist erforderlich und von besonderer Bedeutung, da bei Schaumbeton der Luftporengehalt bis zu 70% beträgt. Die in den Poren enthaltene Luft dehnt sich bei Erwärmung aus und führt zu Gefügerissen, wenn keine ausreichende Rohlingsstandfestigkeit zum Zeitpunkt des Erwärmungsbeginns erreicht ist, welche hinreichend hoch ist, um die Zugspannungen aus der Luftexpansion aufzunehmen. Bei Dampfdruckhärtung besteht zusätzlich die Gefahr, dass bei nicht hinreichender Rohlingsfestigkeit schon bei geringem Druck von 1 bis 2 at die schaumige Masse im Autoklaven zusammengedrückt wird, wodurch Schrumpfungen, Veränderungen an den Abmessungen usw. auftreten. (Siehe Reinsdorf a.a.O.)

Die langen Formstandzeiten zwingen zur Herstellung von grossen Elementen – möglichst Wandelementen – um die Anzahl der vorzuhaltenden Formen in wirtschaftlichen Grenzen zu halten. Die o.g. Formstandzeiten begrenzen auch die technische Kapazität einer industriellen Fertigungsanlage, da notwendige Formenanzahl und notwendiger Flächenbedarf das Verfahren unwirtschaftlich werden lassen.

Eine Warmbehandlung oder eine Autoklavbehandlung zum Zeitpunkt niedriger Viskosität der Masse würde durch die zeitlich und räumlich unterschiedlich vorhandenen Temperaturen in der Rohmasse zu Rohdichteunterschieden und Verformungen innerhalb eines Elementes führen, da die Luftporen je nach Temperatur unterschiedlich expandieren, die Viskositätssteigerung durch Temperaturzufuhr jedoch kontinuierlich vor sich geht.

Ausserdem ist in dem Buch von W. Altner und W. Reichel, Betonschnellerhärtung, Betonverlag GmbH, 1981, Seite 196 bis 206 die elektrothermische Behandlung von Beton beschrieben, in welchem auch über Versuche zum Erwärmen von Beton in einem Hochfrequenzfeld berichtet wird. Hierbei ist vorgesehen, die Rohmischung gleichmässig innerhalb weniger Minuten auf einen Höchstwert zu erwärmen, um eine Erhärtungsbeschleunigung zu erzielen, und mit einer mechanischen Einwirkung, z.B. Nachrütteln, zu kombinieren, um die durch das schnelle Aufwärmen im bereits verdichteten erhärtenden Beton entstandenen Gefügestörungen wieder rückgängig zu machen. Für Schaumbeton ist dies jedoch nicht geeignet, weshalb man Schaumbetonrohlinge in üblicher Weise mit einer Vorlagerungszeit von 3 bis 5 h herstellt und diese erst dann in den Formen einer elektrothermischen Behandlung zum Erzielen der Endfestigkeit und unter Verwendung geringer Aufwärmegeschwindigkeiten unterwirft, vgl. Seite 206. Derartige Vorlagerungszeiten sind aber üblicherweise mit einem grossen Formenaufwand und einem teilweisen Kollabieren des Schaums verbunden, es lassen sich keine sehr geringen Rohdichten erzielen.

Aufgabe der Erfindung ist es, ein Verfahren zu schaffen, mit dem sich einfach und schnell Schaumbetonrohlinge mit genügender Rohlingsfestigkeit und im wesentlichen gleichmässiger Dichte herstellen lassen.

Die Erfindung betrifft daher ein Verfahren zum Herstellen von Schaumbetonrohlingen, wobei eine giessfähige Rohmischung bestehend im wesentlichen aus körnigem, insbesondere silikathaltigem Material, Wasser, Zement und Schaum, wobei der Schaum als solcher der Rohmischung zugesetzt oder in der Rohmischung mittels eines Schaumerzeugers erzeugt wird, hergestellt und in eine Form gebracht wird, wonach der Rohling, wenn er eine ausreichende Festigkeit aufweist, entformt wird. Hierbei ist vorgesehen, dass

a. der Rohmischung vor dem Einfüllen in die Form ein temperaturabhängiger beschleunigender Zusatz für das Erhärten der Rohmischung zugesetzt wird,

b. die in der Form befindliche Rohmischung mittels eines elektrischen Hochfrequenzfeldes homogen auf eine Temperatur von etwa 40 bis 80°C, insbesondere 45 bis 60°C, erwärmt wird,

c. die Erwärmung der in der Form befindlichen Rohmischung so schnell vorgenommen wird, dass die durch die Erwärmung bewirkte Expansion der Rohmischung im wesentlichen beendet ist, bevor die Zementhärtung einsetzt, und

d. der Rohling nach einer Erwärmung während etwa 20 bis 120 s, insbesondere 25 bis 60 s, entformt wird.

Die Rohlinge können nach dem Entformen in üblicher Weise gehärtet werden, so etwa durch Lufttrocknung, durch Härtung in ungespanntem Dampf oder durch Autoklavhärtung mit gespanntem Dampf oder durch $CO_2$-Härtung oder auch ggf. durch elektrothermische Behandlung.

Die Rohlinge werden zweckmässigerweise in einer Form hergestellt, die bezüglich des Austritts von Rohmischung verschliessbar ist und soweit mit Rohmischung gefüllt wird, dass das verbleibende Volumen der durch die Erwärmung der Rohmischung bewirkten Expansion entspricht. Die Rohlinge besitzen nach dem Entformen bereits praktisch ihre endgültige Form und ein Zerteilen von grösseren Blöcken etwa zu Mauersteinen entfällt. Infolgedessen und infolge der kurzen Formstandzeiten und der schnellen Erwärmung ergibt sich eine praktisch gleichmässige Rohdichte für den Rohling bzw. endgültigen Stein und von Stein zu Stein.

Dass die Erwärmung der Rohmischung in der Form so schnell vorgenommen wird, dass die Expansion der Rohmischung infolge der Erwärmung beendet ist, bevor die Zementhärtung im wesentlichen einsetzt, führt dazu, dass die Gefahr von Rissbildungen im Rohling, die normalerweise bei Erwärmung einer Schaum enthaltenden Rohmischung infolge der starken Expansion des Schaumes durch Temperaturehöhung immer vorhanden ist, vermieden wird. Durch die im wesentlichen nach der Expansion einsetzende Zementhärtung wird das Gerüst des Rohlings bei expandiertem Schaum fixiert, wodurch gleichzeitig noch die Rohdichte des Rohlings infolge der Expansion des Schaums herabgesetzt wird.

Durch Verwendung schliessbarer Formen können Plansteine mit hoher Massgenauigkeit hergestellt werden, die beispielsweise miteinander verklebt werden können.

Die Verwendung von einzelnen Formen zur Herstellung der Rohlinge und die giessfähige Konsistenz der Rohmischung ermöglichen es auch ohne weiteres, Lochsteine aus Schaumbeton herzustellen, und zwar mit einem optimalen Lochbild für die Wärmedämmung bei einem hohen Gesamtlochanteil, wobei die Löcher als Sacklöcher ausgebildet sein können. Ferner eignet sich das Verfahren dazu, Vollsteine mit niedriger Rohdichte bis herab zu 300 kg/m³ oder weniger herzustellen sowie Loch- und Vollsteine mit integrierter Wärmedämmung, wobei man unter letzterem die Ausfüllung eines sich im wesentlichen über die Breite oder Länge des Steins erstreckenden Lochs mit einem wärmedämmenden Material wie etwa ein Polystyrolblock, der in dieses Loch eingestreckt wird, versteht.

Auch lässt sich ein Stein mit einer dichteren Aussenschicht — beispielsweise an vier Seiten umlaufend, an zwei gegenüberliegenden Seiten oder nur an einer Breitseite — herstellen, indem man in die Form ein entsprechendes Trennelement einsetzt, das die Form unterteilt. Die jeweiligen Rohmischungen unterschiedlicher Rohdichte werden dann in die jeweiligen abgeteilten Abschnitte der Form eingefüllt, wonach das Trennelement entfernt und die Rohmischung nach Schliessen der Form durchgewärmt wird. Auf diese Weise lassen sich auch Sichtbetonsteine herstellen.

Die zur Entformung und zum nachfolgenden Transport ausreichende Festigkeit erhalten die Rohlinge durch in der Form vorzunehmende Wärmebehandlung, die nicht nur zu kurzen Taktzeiten bei der Herstellung der Rohlinge führt und bei Lochsteinen das Ausbilden von Stegen mit der gewünschten geringen Wandstärke und trotzdem mit der erforderlichen Festigkeit (Rohlingsfestigkeit von mehr als 0,1 N/mm²) ermöglicht, sondern überhaupt erst eine wirtschaftlich akzeptable Verarbeitung einer Rohmischung für Schaumbetonsteine zulässt. Die Verweilzeit in der Form und damit die Taktzeit sinken mit der Erhöhung des beschleunigenden Zusatzes. Infolge der praktisch drucklosen Herstellung der Rohlinge ist der Zusatz von Schaum zur Rohmischung besonders effektiv, da die Schaumporen praktisch bei der Rohlingsherstellung nicht zerdrückt werden und somit im wesentlichen voll zur Herabsetzung der Scherbenrohdichte des Steins oder Formkörpers und damit zur Erzielung guter Wärmedämmeigenschaften beitragen. Überraschend ist ferner, dass die durch den Schaum vorgegebenen Poren im Stein erhalten bleiben, obwohl der Schaum an sich bei den vorgesehenen Endtemperaturen und hohen Aufheizgeschwindigkeiten für die Rohmischung in der Form nur noch eine geringe Standfestigkeit besitzt, falls dieser bei den verwendeten Temperaturen überhaupt noch vorhanden ist.

Anstelle des üblicherweise verwendeten Quarzsandes und/oder -mehls lassen sich auch andere Materialien verwenden, etwa Bims, Tonerde oder Flugasche, Abfallstoffe von Halden od. dgl., die den Quarzsand ganz oder teilweise ersetzen können und ggf. auch noch zu einer Gewichtsverminderung des fertigen Steins beitragen. Bei Autoklavhärtung sind jedoch silikathaltige Materialien zu verwenden, wobei auch Kalk zugemischt werden kann, der dann zur Festigkeit zusätzlich beiträgt.

Als Zement kann beispielsweise ein Portlandzement verwendet werden, während als beschleunigender Zusatz für das Erhärten ein Erhärtungsbeschleuniger, der durch die vorgesehene Temperaturerhöhung aktivierbar, bei der Temperatur der Rohmischung vor dem Einfüllen in die Form jedoch praktisch ohne Wirkung und somit temperaturabhängig ist oder durch einen Erhärtungsverzögerer vor dem Durchwärmen der Rohmischung gebremst wird, oder ein Schnellzement verwendet werden kann, dessen Erhärtungszeitbeginn entsprechend den anlagenseitigen Anforderungen eingestellt ist. Als Erhärtungsbeschleuniger für Portlandzement kommen beispielsweise Tonerdeschmelzzement oder Aluminiumverbindungen wie Aluminiumchlorid, -sulfat und -hydroxid, als Erhärtungsverzögerer Sulfate und Zuckerderivate in Frage.

Gegebenenfalls können der Rohmischung an sich bekannte Verflüssiger zum zusätzlichen Verflüssigen zugegeben werden.

Zusätze anderer Art, insbesondere Fasern, sind ebenfalls möglich.

Die Rohmischung kann sowohl volumetrisch als auch gravimetrisch in die Formen dosiert werden, wobei allerdings ersteres bevorzugt ist, weil sich dann Steine mit im wesentlichen konstanten Gewicht ergeben. Mögliche Schwankungen der Rohdichte der Rohmischung werden ausgeglichem, indem die volumetrisch dosierte Menge gewogen und entsprechend dem dabei erhaltenen Messwert die Dichte der Rohmischung für die nachfolgende Charge nachgeregelt wird. Dies erfolgt durch entsprechende Bemessung der Wasser- und/oder Schaummenge in der Rohmischung, wobei insbesondere die Schaummenge entsprechend eingestellt wird.

Zum Ausformen von Löchern können Formen verwendet werden, die entsprechend ausgebildete Dorne besitzen, jedoch wird es bevorzugt, die Löcher auszubilden, indem Dorne in die teilweise gefüllte Form insbesondere von oben durch die Deckelplatte der Form eingefahren werden, wodurch die Form dann mit der Rohmischung ausgefüllt wird. Bei einer allseitig geschlossenen Form und der Schaumexpansion wird hierbei gleichzeitig die Scharfkantigkeit des geformten Rohlings gewährleistet, während die giessfähige Konsistenz der Rohmischung das Aufsteigen von dieser zwischen den Dornen und damit die Ausbildung der Löcher bei nur sehr geringer mechanischer Belastung der einzufahrenden Dorne ermöglicht. Die Löcher werden vorzugsweise als Sacklöcher ausgebildet.

Der Schaum wird entweder als solcher der Rohmischung beigegeben oder in dieser vor dem Einfüllen in die Form durch Zusatz eines Schaumbildners ausgebildet, jedoch wird ersteres bevorzugt. Schaumrohdichten von etwa 40 bis 100 g/l, insbesondere von etwa 60 bis 80 g/l, werden bevorzugt. Statt mit Luft kann der Schaum auch mit $CO_2$ gefüllt sein, wodurch beim Zerfallen des Schaums unter der Wärmeeinwirkung $CO_2$ frei wird, das zu zusätzlichen festigkeitsbildenden Reaktionen wie beim Luftmörtel führt.

Da Schäume regelmässig temperaturempfindlich sind, ist es zweckmässig, die Temperatur der Rohmischung bis zum Einfüllen in die Form so niedrig zu halten, dass die Standfestigkeit des Schaums durch die Temperatur praktisch nicht beeinträchtigt wird. So besitzen synthetische Schäume praktisch nur unterhalb von 30°C eine ausreichende Standfestigkeit, während Proteinschäume auch noch im Bereich von 30 bis 40°C eine ausreichende Standfestigkeit aufweisen können. Je nach verwendetem Schaum und Temperatur der eingesetzten Materialien sowie der verwendeten Installation kann man daher die Temperatur der Mischung aus silikathaltigem Material, Zement und Wasser und damit die Zugabe an beschleunigenden Zusatz sowie Schaum konstant halten oder entsprechend der Ausgangstemperatur dieser Mischung dosieren.

Dabei ist der Zement hinsichtlich des Ingangsetzens von festigkeitsbildenden Reaktionen durch Zusatz des beschleunigenden Zusatzes so einzustellen, dass diese Reaktionen erst durch die Wärmeeinwirkung in der Form nach der Expansion des Schaums, d.h. dem Erreichen der vorgesehenen Endtemperatur, in massgeblichem Umfang ausgelöst werden. Die der Rohmischung zugesetzte Wassermenge dient hierbei auch zum Einstellen der Zeit, wann dies erfolgt.

Um das Entformen des Steinrohlings zu erleichtern und Anbackungen zu vermeiden, wird es bevorzugt, die Form und ggf. vorhandene Dorne vor dem Einfüllen der Rohmischung mit einem an sich bekannten Trennmittel zu benetzen. Dies kann durch Besprühen oder Eintauchen vorgenommen werden, wobei es bei letzterem zweckmässig ist, ein mittels Ultraschall erregtes Trennmittelbad zu benutzen, um dadurch Reste der Rohmischung von der Form und den Dornen zu entfernen.

Das gleichmässige Durchwärmen der Rohmischung mittels eines elektrischen Feldes eignet sich sowohl für Voll- als auch für Lochsteine und kann durch Beheizen der Form selbst (Kontaktwärme) unterstützt werden. Für die Erwärmung der Rohmischung in der Form mittels eines Hochfrequenzfeldes sind Frequenzen grösser 600 kHz, vorzugsweise 10 MHz, bei Spannungen grösser 5 kV verwendbar, wobei Frequenzen bis zu 30 MHz eingesetzt werden können, während Generatorleistungen grösser 10 kW, vorzugsweise 60 bis 120 kW und mehr eingesetzt werden.

Zum Herstellen der Rohlinge eignet sich etwa eine Vorrichtung mit wenigstens einer Form sowie einer Fülleinrichtung hierfür und mit Einrichtungen zum Entformen der Rohlinge und zum Überführen von diesen auf eine Transporteinrichtung, wobei ggf. in der Form Dorne zum Ausbilden von durch Stege getrennten Löchern in dem in der Form befindlichen Rohling vorgesehen sind. Die Vorrichtung ist mit einer Heizeinrichtung versehen, von der zwei Elemente, etwa die Boden- und die Deckenplatte der Form Kondensatorplatten bilden oder diese mit wechselnder Polarität von den Dornen und zwei Aussenwänden der Form gebildet werden, an die die Hochfrequenzspannung angelegt ist. Die Bodenplatte der Form oder Formen kann hierbei auch von einem umlaufenden Transportband gebildet werden, das ggf. durch eine Nachheizeinrichtung, etwa einen Heiztunnel geführt ist.

Für den zu entformenden Rohling wird in der Regel eine Entformungsstandfestigkeit von wenigstens 0,1 N/mm² erforderlich sein, was jedoch auch davon abhängt, wie er anschliessend gehandhabt wird. Gegebenenfalls kann der gebildete Rohling beispielsweise durch Infrarotbestrahlung oder durch Warmluft beim Abtransport nachgewärmt werden, um auf diese Weise die zu seinen anschliessenden Stapeln notwendige Stapelfestigkeit in kurzer Zeit zu erzielen. Der Rohling verfestigt sich ohnehin nach dem Entformen wegen der aufgenommenen Wärme weiter, während jedoch bereits durch geringfügige Abkühlung der Druck, der durch die expandierte Luft des Schaums auf das Gerüst des Rohlings ausgeübt wird, verschwindet und eine Rissbildung sicher vermieden wird.

*Beispiel 1:*

Eine Rohmischung wird hergestellt aus:

118 kg Quarzmehl mit einer Oberfläche von 1400 cm²/g (Blaine)

390 kg Schnellzement (Heidelberger Schnellzement)

254 kg Wasser

35,8 kg Schaum (Rohdichte 60 kg/m³, Schäummittel Alkylarylsulfonat)

Diese Bestandteile werden in einen Mischer gegeben und während 2 min durchgemischt. Die so hergestellte Rohmischung besitzt eine Temperatur von 20°C.

Die Rohmischung wird in eine Form von 20 cm × 20 cm × 50 cm Grösse gegeben und auf 50°C homogen durch Erwärmung im Hochfrequenzfeld während ca. 35 s erwärmt und auf dieser Temperatur weitere 25 s gehalten. Es wird eine Frequenz von etwa 27 MHz bei einer Spannung von etwa 10 kV und einer Generatorleistung von 60-90 kW verwendet. Der so hergestellte Rohling wird dann entformt und besitzt eine Rohlingsfestigkeit grösser 0,1 N/mm².

Der Rohling wird dann in einem Autoklaven während 8 h bei 12 bar gespanntem Dampf gehärtet und der fertige Stein besitzt dann eine Festigkeit von etwa 2,5 N/mm² und eine Rohdichte von 600 kg/m³.

*Beispiel 2:*

Eine Rohmischung wird hergestellt aus:

528 kg Quarzsand (Korngrösse zwischen 0 und 4 mm)

390 kg Portlandzement PZ 55

3,9 kg Aluminiumhydroxid

230 kg Wasser

24,7 kg Schaumkonzentrat (Verhältnis 1:40 von Alkylarylsulfonat zu Wasser)

Diese Bestandteile werden in einen Mischer gegeben und während 5 min durchgemischt und das Schaumkonzentrat aufgeschäumt. Die Temperatur der Rohmischung beträgt 20°C.

Die Rohmischung wird wie in Beispiel 1 behandelt (45 s Aufheizen) und 25 s nach dem homogenen Erwärmen auf 50°C auf dieser Temperatur gehalten.

Der Rohling wird dann 12 h in ungespanntem Dampf gehärtet und der fertige Stein besitzt dann eine Festigkeit von etwa 2,5 N/mm² und eine Rohdichte von 1000 kg/m³.

## Patentansprüche

1. Verfahren zum Herstellen von Schaumbetonrohlingen, wobei eine giessfähige Rohmischung bestehend im wesentlichen aus körnigem, insbesondere silikathaltigem Material, Wasser, Zement und Schaum, wobei der Schaum als solcher der Rohmischung zugesetzt oder in der Rohmischung mittels eines Schaumerzeugers erzeugt wird, hergestellt und in eine Form eingebracht wird, wonach der Rohling, wenn er eine ausreichende Festigkeit aufweist, entformt wird, dadurch gekennzeichnet, dass

a. der Rohmischung vor dem Einfüllen in die Form ein temperaturabhängiger beschleunigender Zusatz für das Erhärten der Rohmischung zugesetzt wird,

b. die in der Form befindliche Rohmischung mittels eines elektrischen Hochfrequenzfeldes homogen auf eine Temperatur von etwa 40 bis 80°C, insbesondere 45 bis 60°C, erwärmt wird,

c. die Erwärmung der in der Form befindlichen Rohmischung so schnell vorgenommen wird, dass die durch die Erwärmung bewirkte Expansion der Rohmischung im wesentlichen beendet ist, bevor die Zementhärtung einsetzt, und

d. der Rohling nach einer Erwärmung während 20 bis 120 s, insbesondere 25 bis 60 s, entformt wird.

2. Verfahren nach Anspruch 1, dadurch gekennzeichnet, dass eine bezüglich des Austritts von Rohmischung verschliessbare Form verwendet wird, die soweit mit Rohmischung gefüllt wird, dass das verbleibende Volumen im wesentlichen der durch die Erwärmung bewirkten Expansion der Rohmischung entspricht.

3. Verfahren nach Anspruch 1 oder 2, dadurch gekennzeichnet, dass als beschleunigender Zusatz ein durch erhöhte Temperatur aktivierbarer Beschleuniger für den Zement verwendet wird.

4. Verfahren nach Anspruch 1 oder 2, dadurch gekennzeichnet, dass als beschleunigender Zusatz ein Beschleuniger in Kombination mit einem Verzögerer für den Zement verwendet wird, die so eingestellt sind, dass die Aktivierung des Zements etwa bei der vorgesehenen Erwärmungstemperatur für die Rohmischung in der Form erfolgt.

5. Verfahren nach Anspruch 1 oder 2, dadurch gekennzeichnet, dass als beschleunigender Zusatz und wenigstens einen Teil des Zements ein Schnellzement verwendet wird.

6. Verfahren nach einem der Ansprüche 1 bis 5, dadurch gekennzeichnet, dass die Rohmischung volumetrisch dosiert in die Form gefüllt, die dosierte Menge gravimetrisch überprüft und bei den folgenden Chargen die Dichte der Rohmischung durch Änderung des Zusatzes von Wasser und/oder Schaum entsprechend der gravimetrischen Messung nachgeregelt wird.

7. Verfahren nach einem der Ansprüche 1 bis 6, dadurch gekennzeichnet, dass eine Rohmischung verwendet wird, die einen Schaum mit einer Schaumrohdichte von etwa 40 bis 100 g/l, vorzugsweise 60 bis 80 g/l, enthält.

8. Verfahren nach einem der Ansprüche 1 bis 7, dadurch gekennzeichnet, dass der entformte Rohling vorzugsweise während seines Abtransports nacherwärmt wird.

9. Verfahren nach einem der Ansprüche 1 bis 8, dadurch gekennzeichnet, dass nach Erreichen der vorgesehenen Endtemperatur die Energiezufuhr zur Rohmischung beendet und die Rohmischung in der Form bis zum Erreichen der zum Entformen notwendigen Rohlingsfestigkeit gehalten wird.

## Claims

1. Method for manufacturing foam concrete elements wherein a castable raw mix substantially consisting of granular, in particular silica-containing material, water, cement and foam, the foam being added as such to the raw mix or produced in the raw mix by means of a foam producer, is manufactured and introduced into a mould, whereafter the element, when it is sufficiently set, is demoulded, characterized in that

a. before casting into the mould, a temperature-dependent accelerating additive for the setting of the raw mix is added to the raw mix;

b. the raw mix present in the mould is homogeneously heated to a temperature of some 40 to 80°C, particularly 45 to 60°C, by means of an electric high frequency field;

c. the heating of the raw mix present in the mould is effected at a speed such that the expansion of the raw mix brought about by heating is substantially completed before the hardening of the cement sets in, and

d. the element is demoulded after heating has been applied for 20 to 120 s, particularly 25 to 60 s.

2. Method according to claim 1, characterized in that a mould closable relative to the outflow of raw mix is used, said mould being filled with raw mix to the extent that the remaining volume corresponds substantially to the expansion of the raw mix brought about by heating.

3. Method according to claim 1 or 2, characterized in that an accelerator for the cement, which can be activated by an increased temperature, is used as an accelerating additive.

4. Method according to claim 1 or 2, characterized in that, as an accelerating additive, an accelerator is used in combination with a retarder, these two agents being so adjusted that the activation of the cement takes place substantially at the heating temperature intended for the raw mix in the mould.

5. .Method according to claim 1 or 2, characterized in that a quick-setting cement is used as accelerating additive and at least part of the cement.

6. Method according to one of claims 1 to 5, characterized in that the raw mix is introduced into the mould measured volumetrically, the measured quantity is checked gravimetrically and, for the following batches, the density of the raw mix is adjusted in accordance with the gravimetric measurement by varying the addition of water and/or foam.

7. Method according to one of claims 1 to 6, characterized in that a raw mix is used which contains a foam with a foam bulk density of about 40 to 100 g/l, preferably 60 to 80 g/l.

8. Method according to one of claims 1 to 7, characterized in that the demoulded element is reheated preferably while it is being carried away.

9. Method according to one of claims 1 to 9, characterized in that, after the scheduled final temperature has been reached, the supply of energy to the raw mix is ended and the raw mix is kept in the mould until the element hardening condition necessary for demoulding has been reached.

## Revendications

1. Procédé de fabrication d'éléments en béton mousse consistant à préparer un mélange brut apte à la coulée, constitué essentiellement d'un matériau granulaire en particulier silicaté, d'eau, de ciment et de mousse, la mousse étant ajoutée en tant que telle au mélange brut ou formée dans celui-ci au moyen d'un générateur de mousse, et à introduire ce mélange brut dans un moule, l'élément étant démoulé lorsqu'il présente une résistance mécanique suffisante, caractérisé en ce que:

a. on ajoute au mélange brut, avant de verser celui-ci dans le moule, un additif accélérateur sensible à la température pour la prise du mélange brut,

b. le mélange brut qui se trouve dans le moule est chauffé de façon homogène à une température d'environ 40 à 80°C, en particulier de 45 à 60°C, au moyen d'un champ électrique à haute fréquence,

c. le chauffage du mélange brut qui est dans le moule est réalisé suffisamment rapidement pour que l'expansion du mélange brut provoquée par le chauffage soit essentiellement terminée avant que la prise du ciment ne commence, et

d. après chauffage pendant environ 20 à 120 s, en particulier pendant 25 à 60 s, l'élément est démoulé.

2. Procédé selon la revendication 1, caractérisé en ce que l'on emploie un moule pouvant être fermé de façon à s'opposer à la sortie du mélange brut et qui est rempli avec le mélange brut jusqu'à un niveau tel que le volume restant corresponde essentiellement à l'expansion du mélange brut provoquée par le chauffage.

3. Procédé selon la revendication 1 ou 2, caractérisé en ce que l'on emploie comme additif accélérant un accélérateur de prise du ciment qui peut être activé par élévation de température.

4. Procédé selon la revendication 1 ou 2, caractérisé en ce que l'on emploie comme additif accélérant un accélérateur combiné à un retardateur de prise du ciment, qui sont ajustés de telle façon que l'activation du ciment a lieu à peu près à la température de réchauffage prévue pour le mélange brut dans le moule.

5. Procédé selon la revendication 1 ou 2, caractérisé en ce que l'additif accélérant et au moins une partie du ciment employés sont constitués par un ciment rapide.

6. Procédé selon l'une quelconque des revendications 1 à 5, caractérisé en ce que l'on introduit le mélange brut dans le moule en quantité mesurée par volumétrie, que l'on vérifie par gravimétrie la quantité mesurée et que l'on réajuste la densité du mélange brut dans les charges suivantes en faisant varier l'addition d'eau et/ou de mousse en fonction du résultat de la mesure gravimétrique.

7. Procédé selon l'une quelconque des revendications 1 à 6, caractérisé en ce que l'on emploie un mélange brut qui contient une mousse ayant une densité apparente de mousse d'environ 40 à 100 g/l, de préférence de 60 à 80 g/l.

8. Procédé selon l'une quelconque des revendications 1 à 7, caractérisé en ce que l'élément démoulé est de préférence réchauffé pendant son transport.

9. Procédé selon l'une quelconque des revendications 1 à 8, caractérisé en ce que l'on met fin à l'apport d'énergie au mélange brut après qu'il a atteint la température finale prévue et en ce que l'on maintient le mélange brut dans le moule jusqu'à ce qu'il atteigne la résistance mécanique de l'élément nécessaire au démoulage.